# EUROPÄISCHE PATENTSCHRIFT

(11) **EP 2 179 489 B1**
(45) Veröffentlichungstag und Bekanntmachung des Hinweises auf die Patenterteilung: **03.04.2013**
(21) Anmeldenummer: 08759220.0
(22) Anmeldetag: 13.06.2008
(51) Int. Cl.: H02K 1/18, H02K 3/52

(54) **SYNCHRONMOTOR MIT MEHREREN SPULENSEGMENTEN**
SYNCHRONOUS MOTOR COMPRISING MULTIPLE COIL SEGMENTS
MOTEUR SYNCHRONE AVEC PLUSIEURS SEGMENTS DE BOBINE

(30) Priorität: 13.07.2007 DE 102007032680
(43) Veröffentlichungstag der Anmeldung: 28.04.2010
(73) Patentinhaber: ETEL S. A.., 2112 Môtiers (CH)
(72) Erfinder: CARDON, Vincent, F-21700 Arcenant (FR); MOREL, Jean-Pierre, F-25300 Les Fourgs (FR)
(74) Vertreter: Pleyer, Hans Anno
(86) Internationale Anmeldenummer: PCT/EP2008/004750
(87) Internationale Veröffentlichungsnummer: WO 2009/010136

(56) Entgegenhaltungen:
- EP-A- 1 457 826
- WO-A-2007/033857
- DE-A1- 10 318 411
- US-A- 5 642 013
- US-A1- 2003 111 914

## Beschreibung

Die vorliegende Erfindung betrifft einen Synchronmotor mit mehreren Spulensegmenten gemäß dem Oberbegriff von Anspruch 1.

Synchronmotoren mit einem Primärteil mit einzeln gewickelten Spulen und einem Sekundärteil mit Permanentmagneten sind beispielsweise aus der US 5642013 bekannt. Das Primärteil weist hier einen Eisenkern aus einem laminierten Blechpaket mit mehreren Zähnen rechteckigen Querschnitts auf. Um diese Zähne sind Spulen einzeln gewickelt, so dass jede Spule genau einen Zahn umwickelt.

Die DE 10318411 A1 beschreibt einen ähnlichen Linearmotor, dessen Primärteil mehrere Spulensegmente aufweist, die aus mit jeweils einer Spule bewickelten, im Wesentlichen quaderförmigen Blechpaketen bestehen. Diese Spulensegmente sind auf der dem Sekundärteil abgewandten Seite mechanisch und magnetisch leitend miteinander verbunden, so dass sich im Wesentlichen ein Primärteil ähnlich dem im zuvor genannten Stand der Technik beschriebenen Synchronmotor ergibt.

Die WO 20071033857 A1 beschreibt einen Synchronmotor mit Spulensegmenten. Diese Spulensegmente weisen an einem Ende Befestigungsnuten auf. Über diese Nuten können mehrere Spulensegmente beispielsweise durch einschieben eines Nutsteins miteinander verbunden werden.

Je nach Anwendungsfall kann es nachteilig sein, dass zwischen den Magneten des Sekundärteils und dem Blechpaket des Primärteils solcher Linearmotoren erhebliche magnetische Anziehungskräfte bestehen, die von einem Lager aufgefangen werden müssen.

Es sind auch Linearmotoren bekannt, bei denen diese Anziehungskräfte kompensiert sind. So beschreibt beispielsweise die EP 1457826 A1 einen Linearmotor, der zwei Sekundärteile aufweist, die so angeordnet sind, dass sich die Anziehungskräfte der beiden Magnetbahnen auf die Spulensegmente aufheben. In diesem Dokument ist nicht näher beschrieben, wie die einzelnen Spulensegmente miteinander verbunden werden können. Die Verbindung der einzelnen Spulensegmente ist insbesondere dann problematisch, wenn ein besonders guter Wirkungsgrad des Motors angestrebt wird, denn jede Schraube oder jeder Bolzen im Blechpaket verschlechtert den Wirkungsgrad bzw. erhöht die Wirbelstromverluste des Motors.

Aufgabe der Erfindung ist es daher, einen Synchronmotor anzugeben, dessen Spulensegmente so miteinander verbunden sind, dass ein möglichst guter Wirkungsgrad erzielt wird. Die Art der Verbindung soll dabei auch eine Kompensation der Anziehungskräfte ermöglichen, falls dies für die jeweilige Anwendung benötigt wird.

Diese Aufgabe wird gelöst durch einen Synchronmotor mit den Merkmalen des Anspruchs 1. Vorteilhafte Details eines solchen Synchronmotors ergeben sich aus den abhängigen Ansprüchen.

Es wird ein Synchronmotor mit mehreren Spulensegmenten beschrieben, die jeweils einen Eisenkern in Form eines Blechpaketes aufweisen, das von einer Spule umwickelt ist. Diese Spulensegmente zeichnen sich dadurch aus, dass durch die Spulen Befestigungselemente mit wenigstens zwei Schenkeln an zwei gegenüberliegende Flächen des im Wesentlichen quaderförmigen Eisenkerns gepresst werden, wobei jeweils wenigstens ein am Eisenkern anliegender Schenkel des Befestigungselements an den Eisenkern gepresst wird, und wenigstens ein freier Schenkel des Befestigungselements vom Eisenkern absteht. Die freien Schenkel sind an Verbindungselementen befestigt, die mehrere Spulensegmente miteinander verbinden.

Insbesondere nach dem Vergießen eines solchermaßen aufgebauten Primärteils aus mehreren Spulensegmenten mit einem Kunstharz erhält man einen sehr stabilen Aufbau, der bezüglich seiner Verlustleistung optimiert ist, und der in einem Synchronmotor mit kompensierten Magnetkräften eingesetzt werden kann.

Weitere Vorteile sowie Einzelheiten der vorliegenden Erfindung ergeben sich aus der nachfolgenden Beschreibung von bevorzugten Ausführungsformen anhand der Figuren. Dabei zeigt
- Figur 1: ein Spulensegment in Explosionsdarstellung,
- Figur 2: das Spulensegment der Figur 1 in einer anderen Darstellung,
- Figur 3: einen Schnitt durch einen Synchronmotor,
- Figur 4: ein weiteres Spulensegment in Explosionsdarstellung,
- Figur 5: das Spulensegment der Figur 4 in einer anderen Darstellung,
- Figur 6: einen rotatorischen Synchronmotor in zwei Schnittbildern.

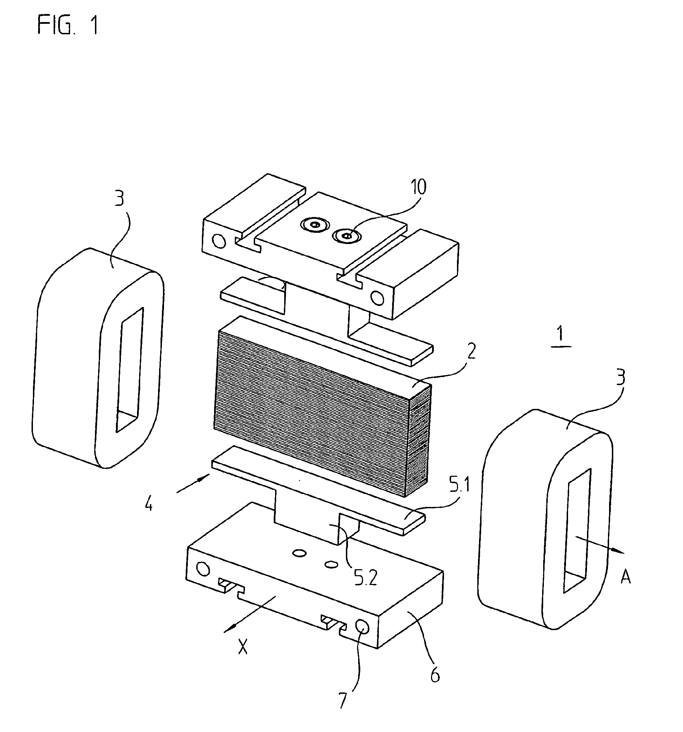

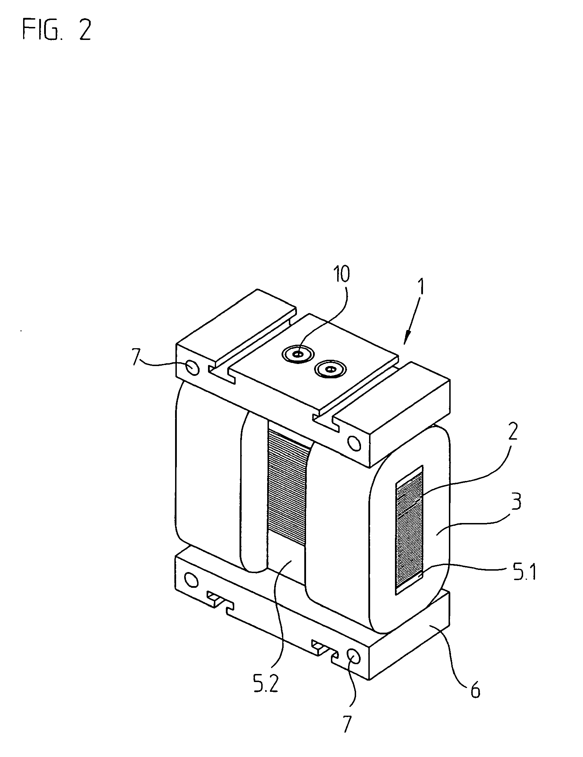

Figur 1 ist eine Explosionsdarstellung eines Spulensegments 1, in Figur 2 ist dieses Spulensegment fertig montiert gezeigt. Es besteht aus einem Eisenkern 2, der von einer Spule 3 umwickelt ist. Der Eisenkern 2 ist vorzugsweise als laminiertes Blechpaket ausgebildet. Die einzelnen rechteckigen Bleche liegen dabei in einer Ebene mit der Achsrichtung A der Spulen 3 und der Bewegungsrichtung X des Synchronmotors, um die Ausbildung von Wirbetströmen im Eisenkern 2 weitestgehend zu verhindern.

Der Eisenkern 2 ist im Wesentlichen quaderförmig ausgebildet. Er weist sechs ebene, paarweise parallele und kongruente Flächen auf, von denen zwei gegenüberliegende Flächen zur Befestigung dienen. Da wie erwähnt Schrauben oder Ähnliches im Eisenkern 2 zu erhöhten Verlusten führen, wird auf solche Befestigungsmittel verzichtet. Vielmehr kommen zwei T-förmige Befestigungselemente 4 zum Einsatz, die je einen am Eisenkern 2 anliegenden Schenkel 5.1 und einen vom Eisenkern 2 abstehenden Schenkel 5.2 aufweisen. Die anliegenden Schenkel 5.1 werden von der Spule 3 gegen den Eisenkern 2 gepresst. Die Spule 3 kann dabei vorgefertigt und auf den Eisenkern 2 aufgeschoben werden, oder direkt auf den Eisenkern 2 gewickelt werden. Letztere Lösung vermeidet zu enge Toleranzen für die verwendeten Bauteile. Beim Aufstecken vorgefertigter Spulen 3 ist es ratsam, die Befestigungselemente 4 mit dem Eisenkern 2 zu verkleben. Bevorzugt werden die Spulen 3 aber direkt auf den Eiskern 2 und die Befestigungselemente 4 gewickelt, ein Verkleben ist dann nicht notwendig.

Wegen des mittig aufragenden freien Schenkels 5.2 können in einem mittleren Bereich des Spulensegments 1 keine Windungen der Spule 3 angebracht werden, die Spule 3 ist in diesem Bereich unterbrochen. Die beiden Spulenhälften sind aber elektrisch zu einer einzigen Spule 3 verbunden.

Die Befestigungselemente 4 bestehen aus einem elektrisch nicht leitenden Material wie beispielsweise Kunststoff oder Keramik. Über den freien Schenkel 5.2 sind sie mittels Schrauben 10 (oder über eine formschlüssige Verbindung, wie im nächsten Ausführungsbeispiel dargestellt) mit einem Verbindungselement 6 verbunden. Dieses Verbindungselement 6 verbindet mehrere Spulensegmente 1 miteinander. Vorzugsweise besteht das Verbindungselement 6 aus einem stranggepressten Aluminiumprofil. Dieses Profil wird entweder auf die Länge des gesamten Primärteils (also die Länge aller Spulensegmente 1 in Bewegungsrichtung X) geschnitten, oder auf die Länge eines Spulensegments 1. Über geeignete Befestigungsmittel werden die einzelnen Verbindungselemente miteinander bzw. mit der jeweiligen Applikation verbunden. In der Figur 1 sind T-förmige Ausnehmungen gezeigt, die diesen Zwecken dienen.

Die Verbindungselemente 6 weisen Kühlkanäle 7 auf, die dem Abtransport von Verlustwärme aus den Spulensegmenten 1 dienen. Dies ist eine besonders wirksame Maßnahme, wenn die Befestigungselemente 4 eine gute Wärmeleitfähigkeit aufweisen. Ein gut geeignetes Material für diese Befestigungselemente 4 ist daher beispielsweise der unter dem Handelsnamen CoolPoly erhältliche Kunststoff auf Basis von Polyphenylsulfid, der sich für das Spritzgießverfahren eignet. Aber auch die Keramiken Aluminiumnitrid oder Al₂O₃ sind geeignete Werkstoffe zur Herstellung der Befestigungselemente 4. Wegen der guten Wärmeleitfähigkeit dieser Stoffe wird die in den Spule 3 oder durch Wirbelströme im Eisenkern 2 entstehende Wärme abtransportiert.

Das Primärteil mit seinen mehreren Spulensegmenten 1 wird schließlich mit einem Kunstharz vergossen, um dem Primärteil eine annähend quaderförmige Gestalt zu geben, dessen Stabilität zu verbessern, die Wärmeleitung zu den Kühlkanälen zu verbessern und um die Spulen vor externen Einflüssen und Beschädigungen zu schützen.

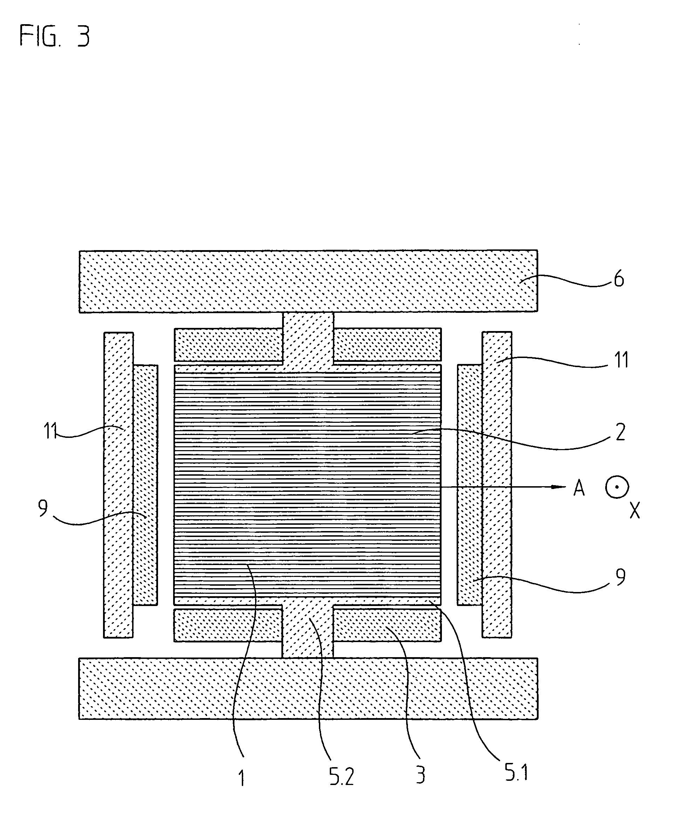

Figur 3 zeigt einen Schnitt durch einen vollständigen Synchronmotor. Die Bestandteile des dargestellten Spulensegments 1 sind wie oben bezeichnet. Die Achsrichtung A der im Schnitt dargestellten Spulen 3 ist eingezeichnet, die Bewegungsrichtung X der Spulensegmente 1 bzw. des Primärteils steht senkrecht auf der Zeichenebene. Beabstandet von den beiden Stirnflächen des Eisenkerns 2, die auf der Achsrichtung A der Spulen 3 senkrecht stehen, sind Magnete 9 auf je einem Joch 11 angeordnet, und zwar mit abwechselnder Polarität entlang der gesamten Länge des Linearmotors in Bewegungsrichtung X. Zwei Magnete 9, die den Stirnflächen eines bestimmten Spulensegments 1 gegenüberliegen, haben die gleiche magnetische Ausrichtung, so dass der einen Stirnfläche ein Nordpol, der anderen Stirnfläche ein Südpol gegenüberliegt. Die Anziehungskräfte der Magnete 9 auf den Eisenkern 2 heben sich dabei weitestgehend auf, so dass eine Führung für das Primärteil keine großen Querkräfte aufnehmen muss.

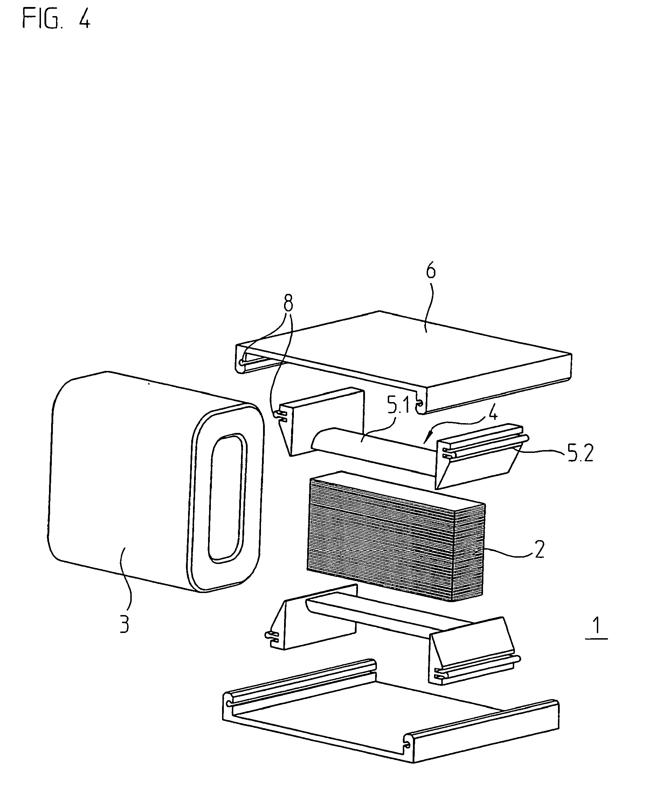

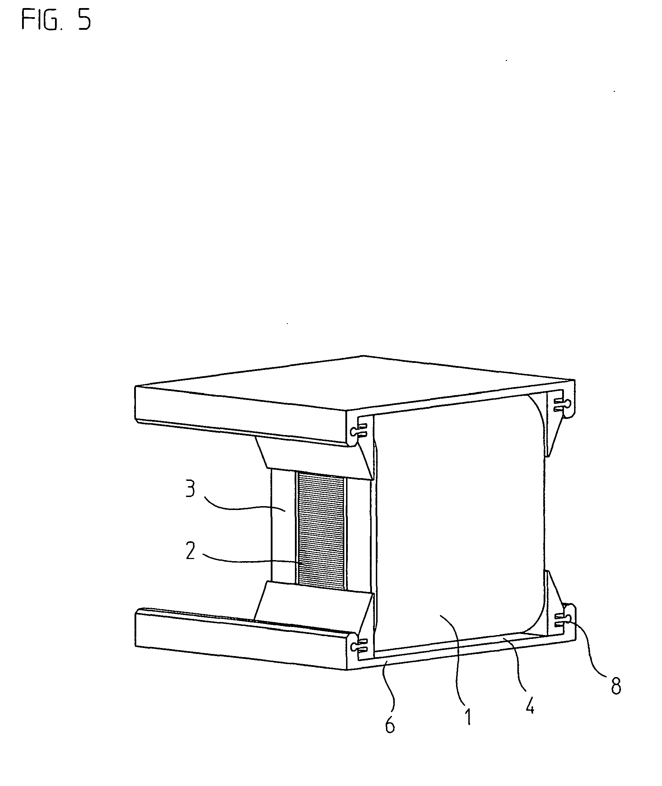

Die Figuren 4 und 5 zeigen ein zweites Ausführungsbeispiel eines erfindungsgemäßen Spulensegments 1. Es wird hier auf die wesentlichen Unterschiede zum ersten Ausführungsbeispiel eingegangen. Es sind die Verbindungselemente 4 U-förmig ausgebildet, die freien Schenkel 5.2 stehen von den Enden des Eisenkerns 2 ab. Diese Konfiguration erlaubt es, den Eisenkern 2 vollständig zu bewickeln, was eine etwas höhere Motorleistung als im ersten Ausführungsbeispiel ertaubt. Das Verbindungselement 6 wird über formschlüssige Verbindungen 8 mit den freien Schenkeln 5.2 der Befestigungselemente verbunden.

Eine Montage von vorgefertigten Spulen 3 ist mit U-förmigen Befestigungselementen 4 nicht möglich, da ein Aufschieben der Spulen 3 auf den Eisenkern 2 verhindert ist. Setzt man aber zwei L-förmige Verbindungselemente 4 zu einem U-förmigen zusammen, so ist auch die Verwendung von vorgefertigten Spulen möglich.

Für beide Ausführungsbeispiele gilt, dass die mit der Spule 3 bewickelten Bereiche des Eisenkerns 2, die nicht durch ein Befestigungselement 4 geschützt sind, mit einer Isolation versehen werden müssen, um den direkten Kontakt zwischen der Spule 3 und dem Eisenkern 2 zu verhindern. Hierzu kann eine dünne, nicht leitende Folie beispielsweise aus Polyethylenterephthalat und/oder Polyamid dienen, die zwischen dem Eisenkern 2 und der Spule 3 angeordnet ist. Eine andere Möglichkeit zur Isolation des Eisenkernes 2 wäre eine am Befestigungselement 4 angeformte Schürze, die sich auf den Eisenkern 2 aufstecken lässt und die zumindest alle Bereiche des Eisenkerns 2, die mit der Spule 3 in Kontakt kommen könnte, bedeckt. Da die Befestigungselemente 4 vorteilhaft als Spritzgussteile hergestellt werden, ließe sich so eine Zusatzfunktion als Isolator kostengünstig realisieren.

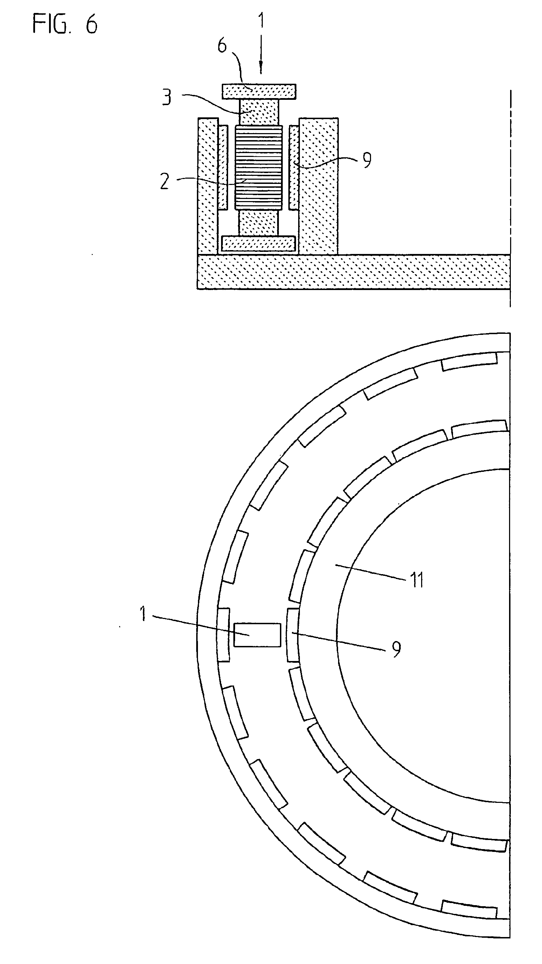

Figur 6 zeigt schließlich, dass das vorgestellte Konzept nicht nur für Linearmotoren eingesetzt werden kann, es sind auch rotatorische Motoren (Torquemotoren) möglich. Letztlich handelt es sich bei einem solchen Motor um einen gebogenen, zu einem Vollkreis geschlossenen Linearmotor.

## Patentansprüche

1. Synchronmotor mit mehreren Spulensegmenten (1), die jeweils einen Eisenkern (2) in Form eines Blechpakets aufweisen, das von einer Spule (3) umwickelt ist, **dadurch gekennzeichnet, dass** durch die Spulen (3) Befestigungselemente (4) mit wenigstens zwei Schenkeln (5.1, 5.2) an zwei gegenüberliegende Flächen des im Wesentlichen quaderförmigen Eisenkerns (2) gepresst werden, wobei jeweils wenigstens ein am Eisenkern (2) anliegender Schenkel (5.1) des Befestigungselements (4) an den Eisenkern (2) gepresst wird, und wenigstens ein freier Schenkel (5.2) des Befesügungselements (4) vom Eisenkern (2) absteht, wobei die freien Schenkel (5.2) an Verbindungselementen (6) befestigt sind, die mehrere Spulensegmente (1) miteinander verbinden, wobei die Befestigungselemente (4) aus elektrisch nicht leitendem Material wie beispielsweise aus Kunststoff oder Keramik bestehen, und wobei auf zwei in einer Achsrichtung (A) der Spulen (3) gegenüberliegenden Seiten der Eisenkerne (2) Magnete (9) beabstandet angeordnet sind, so dass sich Anziehungskräfte der Magnete (9) auf die Eisenkerne (2) jeweils aufheben.

2. Synchronmotor nach Anspruch 1, **dadurch gekennzeichnet, dass** jeweils ein anliegender und ein freier Schenkel (5.1, 5.2) in etwa einen rechten Winkel einschließen.

3. Synchronmotor nach Anspruch 1 oder 2, **dadurch gekennzeichnet, dass** die Befestigungselemente (4) T-, L- oder U-förmig sind.

4. Synchronmotor nach einem der Ansprüche 1 - 3, **dadurch gekennzeichnet, dass** die Verbindungselemente (4) stranggepresste Aluminiumprofile sind.

5. Synchronmotor nach einem der Ansprüche 1 - 4, **dadurch gekennzeichnet, dass** die Befestigungselemente (4) mit den Verbindungselementen (6) mittels Schrauben (10) verbunden sind.

6. Synchronmotor nach einem der Ansprüche 1 - 5, **dadurch gekennzeichnet, dass** die Befestigungselemente (4) mit den Verbindungselementen (6) mittels einer formschlüssigen Verbindung (8) verbunden sind.

7. Synchronmotor nach einem der Ansprüche 1 - 6, **dadurch gekennzeichnet, dass** die Verbindungselemente (6) Kühlkanäle (7) zum Abtransport von Verlustwärme aus den Spulensegmenten (1) aufweisen.

## Claims

1. Synchronous motor with multiple coil segments (1), which have an iron core (2) in the form of a sheet metal packet, which is surrounded by a coil (3), **characterized by** fastening elements (4) with at least two legs (5.1, 5.2) being pressed onto two opposed surfaces of the essentially cuboid iron core (2), wherein in each case at least one leg (5.1) of the fastening element (4) adjacent to the iron core (2) is pressed against the iron core (2), and at least one free leg (5.2) of the fastening element (4) is spaced away from the iron core (2), whereby the free legs (5.2) are joined to connecting elements (6), that connect multiple coil segments (1) with each other, wherein said fastening elements (4) consist of electrically non-conducting material such as plastic or ceramic, and wherein magnets (9) are arranged distanced from two sides of the iron cores (2) , the two sides opposed to each other in an axis direction (A) of the coils (3), so that the attraction forces of the magnets (9) on the iron cores (2) compensate each other.

2. Synchronous motor according to Claim 1, **characterized by** one adjoining and one free leg (5.1, 5.2) situated to approximately comprise a right angle.

3. Synchronous motor according to Claim 1 or 2, **characterized by** said fastening elements (4) being T, L or U shaped.

4. Synchronous motor according to one of the Claims 1 to 3, **characterized by** said connecting elements (4) being extruded aluminum profiles.

5. Synchronous motor according to one of the Claims 1 to 4, **characterized by** said fastening elements (4) being connected with said connecting elements (6) by screws (10).

6. Synchronous motor according to one of the Claims 1 to 5, **characterized by** said fastening elements (4) being joined with said connecting elements (6) by means of a positive-locking connection (8).

7. Synchronous motor according to one of the Claims 1 to 6, **characterized by** said fastening elements (6) having cooling channels (7) for the dissipation of heat losses from the coil segments (1).

## Revendications

1. Moteur synchrone comportant plusieurs segments de bobine (1) qui comprennent chacun un noyau de fer (2) en forme de paquet de tôles qui est enveloppé par une bobine (3) , **caractérisé en ce que** des éléments de fixation (4) comportant au moins deux branches (5.1, 5.2) sont pressés par les bobines (3) sur deux faces opposées du noyau de fer (2) sensiblement parallélépipédique, dans lequel au moins une branche (5.1) de l'élément de fixation (4) appliquée au noyau de fer (2) étant pressée sur le noyau de fer (2), et au moins une branche libre (5.2) de l'élément de fixation (4) étant écartée du noyau de fer (2), dans lequel les branches libres (5.2) étant fixées à des éléments de liaison (6) qui relient plusieurs segments de bobine (1) les uns aux autres, dans lequel les éléments de fixation (4) étant constitués de matériaux non conducteurs électriquement comme par exemple en plastique ou en céramique, et dans lequel des aimants (9) étant disposés sur deux faces opposées des noyaux de fer (2) dans le sens axial (A) des bobines (3) avec un écartement tel que les forces d'attraction des aimants (9) sur les noyaux de fer (2) s'annulent.

2. Moteur synchrone selon revendication 1, **caractérisé en ce que** respectivement une branche appliquée et une branche libre (5.1, 5.2) forment approximativement un angle droit.

3. Moteur synchrone selon revendication 1 ou 2, **caractérisé en ce que** lesdits éléments de fixation (4) sont de forme T, L ou U.

4. Moteur synchrone selon une des revendications 1 - 3, **caractérisé en ce que** lesdits éléments de liaison (4) sont des profils en aluminium extrudés.

5. Moteur synchrone selon une des revendications 1 - 4, **caractérisé en ce que** lesdits éléments de fixation (4) sont assemblés avec lesdits éléments de liaison (6) au moyen de vis (10).

6. Moteur synchrone selon une des revendications 1 - 5, **caractérisé en ce que** lesdits éléments de fixation (4) sont assemblés avec lesdits éléments de liaison (6) au moyen d'une liaison par obstacle (8).

7. Moteur synchrone selon une des revendications 1 - 6, **caractérisé en ce que** lesdits éléments de liaison (6) comportent des canaux de refroidissement (7) pour l'évacuation des pertes thermiques venant desdits segments de bobines (1).
